# EUROPEAN PATENT APPLICATION

(11) **EP 4 852 377 A1**
(43) Date of publication of application: **09.12.2026**
(21) Application number: 25757680.1
(22) Date of filing: 17.02.2025
(51) Int. Cl.: H04L 25/02

(54) **INFORMATION TRANSMISSION METHOD, APPARATUS, AND SYSTEM**

(30) Priority: 19.02.2024 CN 202410185737
(71) Applicant: HUAWEI TECHNOLOGIES CO., LTD., Shenzhen, Guangdong 518129 (CN)
(72) Inventor: GAN, Linxiao, Shenzhen, Guangdong 518129 (CN); ZOU, Tong, Shenzhen, Guangdong 518129 (CN); GAO, Xiang, Shenzhen, Guangdong 518129 (CN); ZHANG, Zhening, Shenzhen, Guangdong 518129 (CN)
(74) Representative: Huawei European IPR
(86) International application number: PCT/CN2025/077553
(87) International publication number: WO 2025/176086

(57) **Abstract**

This application provides an information transmission method, an apparatus, and a system, relating to the field of communication technologies. The method includes: receiving first information, where the first information is used to configure N SRS ports of a first SRS resource, M of the N SRS ports are used to send an SRS, N is a positive integer greater than 2, and M is a positive integer less than N. A first apparatus may send an SRS through a part of SRS ports configured by a second apparatus. The number of the part of SRS ports may be equal to the number of antenna ports supported by the first apparatus. Therefore, in this solution, when the first apparatus supports other numbers (less than N) of antenna ports, channel measurement can be performed on the corresponding numbers of SRS ports, thereby improving communication flexibility.

## Description

This application claims priority to Chinese Patent Application No. 202410185737.9, filed with the China National Intellectual Property Administration on February 19, 2024 and entitled "INFORMATION TRANSMISSION METHOD, APPARATUS, AND SYSTEM", which is incorporated herein by reference in its entirety.

### TECHNICAL FIELD

This application relates to the field of communication technologies, and more specifically, to an information transmission method, an apparatus, and a system.

### BACKGROUND

Currently, in the new radio (new radio, NR) protocol, terminal devices support 1T, 2T, 4T, or 8T antenna ports for uplink transmission, where T represents a transmit antenna (or a transmit antenna port, or a transmit port). A network device may configure sounding reference signal (sounding reference signal, SRS) resources with one, two, four, or eight SRS ports for a terminal device. For example, when a terminal device supports 2T uplink transmit antenna ports, the network device may configure one or two SRS resource sets for the terminal device, where each SRS resource set may include one or two SRS resources, and each SRS resource includes two SRS ports. The network device receives SRSs from the terminal device to measure the 2T channels, calculate a precoding matrix, and indicate the precoding matrix to the terminal device.

However, when the terminal device supports other numbers of antenna ports, the network device cannot perform channel measurement.

### SUMMARY

This application provides an information transmission method, an apparatus, and a system, enabling a network device to perform channel measurement when a terminal device supports other numbers of antenna ports, thereby improving communication flexibility.

According to a first aspect, an information transmission method is provided. The method may be performed by a first apparatus, a component (for example, a processor, a chip, or a chip system) in the first apparatus, or a logical module or software that can implement all or a part of functions of the first apparatus. Optionally, the first apparatus may be a terminal device.

The method includes: receiving first information, where the first information is used to configure N SRS ports of a first SRS resource, M of the N SRS ports are used to send an SRS, N is a positive integer greater than 2, and M is a positive integer less than N.

According to the foregoing embodiment, the first apparatus may send an SRS through a part of SRS ports configured by a second apparatus. The number of the part of SRS ports may be equal to the number of antenna ports supported by the first apparatus. Therefore, in this solution, when the first apparatus supports other numbers of antenna ports, the second apparatus can perform channel measurement on the corresponding numbers of SRS ports, thereby improving communication flexibility.

With reference to the first aspect, in some implementations of the first aspect, N=4 and M=3.

According to the foregoing embodiment, when the first apparatus supports 3T antenna ports, the second apparatus can implement channel measurement and precoding calculation on the three SRS ports, thereby improving communication flexibility.

With reference to the first aspect, in some implementations of the first aspect, indexes of the N SRS ports include a first index, a second index, a third index, and a fourth index; and indexes of the M SRS ports include the first index, the second index, and the third index, or indexes of the M SRS ports include the first index, the second index, and the fourth index, or indexes of the M SRS ports include the first index, the third index, and the fourth index, or indexes of the M SRS ports include the second index, the third index, and the fourth index.

With reference to the first aspect, in some implementations of the first aspect, the method further includes: receiving second information, where the second information indicates the M SRS ports.

According to the foregoing embodiment, the second apparatus may indicate the M SRS ports, so that the second apparatus can configure, as required, an SRS port used by the first apparatus to send an SRS, thereby further improving communication flexibility.

With reference to the first aspect, in some implementations of the first aspect, the indexes of the N SRS ports include the first index, the second index, the third index, and the fourth index, and the method further includes: determining, based on the second information, that the indexes of the M SRS ports include the first index, the second index, and the third index, where the second information includes the fourth index; or determining, based on the second information, that the indexes of the M SRS ports include the first index, the second index, and the fourth index, where the second information includes the third index; or determining, based on the second information, that the indexes of the M SRS ports include the first index, the third index, and the fourth index, where the second information includes the second index; or determining, based on the second information, that the indexes of the M SRS ports include the first index, the second index, and the third index, where the second information includes the first index.

According to the foregoing embodiment, the second information may indicate an SRS port in the N SRS ports that is not used to send an SRS, so that the second information can occupy fewer bits, thereby saving resources.

With reference to the first aspect, in some implementations of the first aspect, the indexes of the N SRS ports include the first index, the second index, the third index, and the fourth index, and the method further includes: determining, based on the second information, that the indexes of the M SRS ports include the first index, the second index, and the third index, where the second information includes the first index, the second index, and the third index; or determining, based on the second information, that the indexes of the M SRS ports include the first index, the second index, and the fourth index, where the second information includes the first index, the second index, and the fourth index; or determining, based on the second information, that the indexes of the M SRS ports include the first index, the third index, and the fourth index, where the second information includes the first index, the third index, and the fourth index; or determining, based on the second information, that the indexes of the M SRS ports include the first index, the second index, and the third index, where the second information includes the first index, the second index, and the third index.

According to the foregoing embodiment, the second information may include the indexes of the M SRS ports, and an SRS port that is not indicated in the first SRS resource may be multiplexed by another terminal device, thereby improving resource utilization.

With reference to the first aspect, in some implementations of the first aspect, the method further includes: receiving third information, where the third information is used to configure P SRS ports of a second SRS resource, P is a positive integer greater than 2, P=N, Q of the P SRS ports are used to send an SRS, Q is a positive integer less than P, and the Q SRS ports correspond to the M SRS ports.

According to the foregoing embodiment, when the second apparatus configures a plurality of SRS resources with a same number of antenna ports, SRS ports used to send SRSs in these SRS resources are associated with each other. When SRS ports used to send SRSs are predefined, after determining an SRS port used to send an SRS in one SRS resource, the first apparatus may determine, based on an association relationship, an SRS port used to send an SRS in another SRS resource, thereby reducing calculation overheads of the first apparatus. When SRS ports used to send SRSs are indicated by the second apparatus, the second apparatus may indicate only an SRS port used to send an SRS in one SRS resource, and does not need to indicate an SRS port used to send an SRS in another SRS resource, thereby reducing signaling overheads.

With reference to the first aspect, in some implementations of the first aspect, the method further includes: equally distributing total SRS transmit power to the M SRS ports.

For example, the M SRS ports may be understood as SRS transmit ports of the first apparatus (for example, a terminal device), referred to as SRS transmit ports for short. That is, the foregoing solution may be expressed as equally distributing the total SRS transmit power to the SRS transmit ports (of the first apparatus).

According to the foregoing embodiment, the first apparatus equally distributes the total SRS transmit power to the M SRS ports rather than the N SRS ports, so that actual SRS transmit power is increased. For example, when M=4 and N=3, if the total SRS transmit power is equally distributed to four SRS ports, power distributed to each SRS port is one quarter of the total SRS transmit power. In this embodiment of this application, the total SRS transmit power is equally distributed to three SRS ports, and power distributed to each SRS port is one third of the total SRS transmit power, so that SRS transmit power of each SRS port is increased.

With reference to the first aspect, in some implementations of the first aspect, the M SRS ports respectively correspond to M physical uplink shared channel (physical uplink shared channel, PUSCH) ports.

According to the foregoing embodiment, the M SRS ports respectively correspond to the M PUSCH ports, so that a PUSCH can be sent.

With reference to the first aspect, in some implementations of the first aspect, the method further includes: scaling total PUSCH transmit power based on a scaling coefficient, where the scaling coefficient is equal to a ratio of the number of non-zero power PUSCH ports to the number of SRS transmit ports (or M).

The number of SRS transmit ports may be replaced with the number of SRS transmit ports of the first apparatus (for example, a terminal device).

According to the foregoing embodiment, the first apparatus determines the scaling coefficient based on M, and then scales the total PUSCH transmit power based on the scaling coefficient, which avoids reducing actual PUSCH transmit power or prevents PUSCH transmit power from exceeding capabilities of power amplifiers (power amplifier, PA) of different antenna ports.

With reference to the first aspect, in some implementations of the first aspect, the method further includes: sending fourth information, where the fourth information indicates that a maximum number of codebook-based physical uplink shared channel PUSCH multiple-input multiple-output layers supported by the first apparatus is M.

According to the foregoing embodiment, the second apparatus can learn of the number of antenna ports supported by the first apparatus, to perform subsequent processing.

With reference to the first aspect, in some implementations of the first aspect, the method further includes: sending fifth information, where the fifth information indicates that a maximum number of SRS ports supported by the first apparatus in an SRS resource is M.

According to the foregoing embodiment, the second apparatus can learn of the number of antenna ports supported by the first apparatus, to perform subsequent processing.

With reference to the first aspect, in some implementations of the first aspect, the method further includes: sending sixth information, where the sixth information indicates an antenna switching capability supported by the first apparatus, and the sixth information is M transmit and M receive (tMrM), tMr4, or tMr8.

According to the foregoing embodiment, the second apparatus can learn of the number of antenna ports supported by the first apparatus, to perform subsequent processing.

With reference to the first aspect, in some implementations of the first aspect, the method further includes: sending seventh information, where the seventh information indicates that the number of uplink antenna ports supported by the first apparatus is M.

According to the foregoing embodiment, the second apparatus can learn of the number of antenna ports supported by the first apparatus, to perform subsequent processing.

According to a second aspect, an information transmission method is provided. The method may be performed by a second apparatus, a component (for example, a processor, a chip, or a chip system) in the second apparatus, or a logical module or software that can implement all or a part of functions of the second apparatus. Optionally, the second apparatus may be a network device.

The method includes: sending first information, where the first information is used to configure N SRS ports of a first SRS resource, M of the N SRS ports are used to send an SRS, N is a positive integer greater than 2, and M is a positive integer less than N.

With reference to the second aspect, in some implementations of the second aspect, N=4 and M=3.

With reference to the second aspect, in some implementations of the second aspect, indexes of the N SRS ports include a first index, a second index, a third index, and a fourth index; and indexes of the M SRS ports include the first index, the second index, and the third index, or indexes of the M SRS ports include the first index, the second index, and the fourth index, or indexes of the M SRS ports include the first index, the third index, and the fourth index, or indexes of the M SRS ports include the second index, the third index, and the fourth index.

With reference to the second aspect, in some implementations of the second aspect, the method further includes: sending second information, where the second information indicates the M SRS ports.

With reference to the second aspect, in some implementations of the second aspect, the indexes of the N SRS ports include the first index, the second index, the third index, and the fourth index, and the second information includes the fourth index, the third index, the second index, or the first index.

With reference to the second aspect, in some implementations of the second aspect, the indexes of the N SRS ports include the first index, the second index, the third index, and the fourth index, and the second information includes the first index, the second index, and the third index; or the first index, the second index, and the fourth index; or the first index, the third index, and the fourth index; or the first index, the second index, and the third index.

With reference to the second aspect, in some implementations of the second aspect, the method further includes: sending third information, where the third information is used to configure P SRS ports of a second SRS resource, P is a positive integer greater than 2, P=N, Q of the P SRS ports are used to send an SRS, Q is a positive integer less than P, and the Q SRS ports correspond to the N SRS ports.

With reference to the second aspect, in some implementations of the second aspect, the method further includes: receiving fourth information, where the fourth information indicates that a maximum number of codebook-based physical uplink shared channel PUSCH multiple-input multiple-output layers supported by a first apparatus is M.

With reference to the second aspect, in some implementations of the second aspect, the method further includes: receiving fifth information, where the fifth information indicates that a maximum number of SRS ports supported by a first apparatus in an SRS resource is M.

With reference to the second aspect, in some implementations of the second aspect, the method further includes: receiving sixth information, where the sixth information indicates an antenna switching capability supported by a first apparatus, and the sixth information is tMrM, tMr4, or tMr8.

With reference to the second aspect, in some implementations of the second aspect, the method further includes: receiving seventh information, where the seventh information indicates that the number of uplink antenna ports supported by a first apparatus is M.

According to a third aspect, a communication apparatus is provided, including a processing circuit (or a processor) and an input/output interface (which may also be referred to as an interface circuit). The input/output interface is configured to input and/or output signals, and the processing circuit is configured to perform the method in any one of the first aspect and the possible implementations of the first aspect, or the processing circuit is configured to perform the method in any one of the second aspect and the possible implementations of the second aspect.

In some implementations, the processing circuit is configured to communicate with another apparatus through the interface circuit, and perform the method in any one of the first aspect and the possible implementations of the first aspect, or the method in any one of the second aspect and the possible implementations of the second aspect.

According to a fourth aspect, a communication apparatus is provided. The communication apparatus may include a device, a module, or the like configured to perform a function of the communication apparatus.

In some implementations, the communication apparatus may include a one-to-one corresponding module or unit configured to perform the method/operation/step/action described in any one of the first aspect and the possible implementations of the first aspect. The module or unit may be implemented by a hardware circuit, software, or a combination of a hardware circuit and software.

In some implementations, the communication apparatus may include a one-to-one corresponding module or unit configured to perform the method/operation/step/action described in any one of the second aspect and the possible implementations of the second aspect. The module or unit may be implemented by a hardware circuit, software, or a combination of a hardware circuit and software.

According to a fifth aspect, a computer-readable storage medium is provided. The computer-readable storage medium stores a computer program or instructions. When the computer program or the instructions are run on a computer, the method in any one of the first aspect and the possible implementations of the first aspect is performed, or the method in any one of the second aspect and the possible implementations of the second aspect is performed.

According to a sixth aspect, a computer program product is provided, including a computer program or instructions. When the computer program or the instructions are run on a computer, the method in any one of the first aspect and the possible implementations of the first aspect is performed, or the method in any one of the second aspect and the possible implementations of the second aspect is performed.

According to a seventh aspect, a communication apparatus is provided, including a processor. The processor is configured to be connected to a memory, and invoke a program stored in the memory, to perform the method in any one of the possible implementations of the first aspect, or the method in any one of the possible implementations of the second aspect. The memory may be located inside or outside the communication apparatus. In addition, there are one or more processors.

In an implementation, the communication apparatus in the third aspect, the fourth aspect, or the seventh aspect may be a chip or a chip system.

According to an eighth aspect, a chip is provided, including a processor configured to invoke a computer program or computer instructions in a memory, to enable the processor to perform any one of the implementations of the first aspect, or any one of the implementations of the second aspect.

In an implementation, the processor is coupled to the memory through an interface.

According to a ninth aspect, a communication system is provided, including a first apparatus and a second apparatus. The first apparatus is configured to perform any one of the first aspect and the possible implementations of the first aspect, and the second apparatus is configured to perform any one of the second aspect and the possible implementations of the second aspect.

For descriptions of beneficial effects of any one of the second aspect to the ninth aspect, refer to the descriptions of the beneficial effect of the first aspect.

### BRIEF DESCRIPTION OF DRAWINGS

FIG. 1 is a diagram of a communication system;
FIG. 2 is a diagram of a structure of a terminal device;
FIG. 3 is a schematic flowchart of an information transmission method according to an embodiment of this application;
FIG. 4 is a block diagram of a communication apparatus according to an embodiment of this application; and
FIG. 5 is a block diagram of another communication apparatus according to an embodiment of this application.

### DESCRIPTION OF EMBODIMENTS

The following describes technical solutions of this application with reference to accompanying drawings.

Aspects, embodiments, or features are presented in this application by describing a system that may include a plurality of devices, components, modules, or the like. It should be appreciated and understood that, each system may include other devices, components, modules, or the like, and/or may not include all devices, components, modules, or the like discussed with reference to the accompanying drawings. In addition, a combination of these solutions may be used.

In addition, in embodiments of this application, the words such as "example" and "for example" mean giving an example, an illustration, or a description. Any embodiment or design scheme described as an "example" in this application should not be explained as being more preferred or having more advantages than another embodiment or design scheme. To be precise, the word "example" is intended to present a concept in a specific manner.

Service scenarios described in embodiments of this application are intended to describe the technical solutions in embodiments of this application more clearly, but do not constitute limitations on the technical solutions provided in embodiments of this application. A person of ordinary skill in the art may learn that, as new service scenarios emerge, the technical solutions provided in embodiments of this application are also applicable to similar technical problems.

Reference to "an embodiment", "some embodiments", or the like described in this specification means that one or more embodiments of this application include a specific feature, structure, or characteristic described with reference to the embodiment. Therefore, phrases such as "in an embodiment", "in some embodiments", "in some other embodiments", and "in other embodiments" throughout this specification do not necessarily refer to a same embodiment, but mean "one or more but not all embodiments", unless otherwise specifically emphasized. Terms such as "include", "comprise", and "have" and their variants all mean "including but not limited to", unless otherwise specifically emphasized.

The "first", "second", and the like in embodiments of this application are merely described as examples and used to distinguish between described objects, which do not indicate an order, nor indicate a particular number limitation in embodiments of this application, and shall not constitute any limitation on embodiments of this application.

It should be understood that sequence numbers of the foregoing processes do not mean execution sequences in embodiments of this application. The execution sequences of the processes should be determined based on functions and internal logic of the processes, and should not be construed as any limitation to the implementation processes of embodiments of this application.

It may be understood that the term "and/or" in this specification merely describes an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The technical solutions in embodiments of this application may be applied to various communication systems, including but not limited to: a wireless local area network communication system (wireless local area network, WLAN), a global system for mobile communications (global system for mobile communications, GSM), an enhanced data rate for GSM evolution system (enhanced data rate for gsm evolution, EDGE), a wideband code division multiple access system (wideband code division multiple access, WCDMA), a code division multiple access 2000 system (code division multiple access, CDMA2000), a time division-synchronous code division multiple access system (time division-synchronization code division multiple access, TD-SCDMA), a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system or a new radio (new radio, NR) system, a narrowband internet of things (narrowband internet of things, NB-IoT) system, an enhanced machine-type communication (enhanced machine-type communication, eMTC) system, an enhanced mobile broadband (enhanced mobile broadband, eMBB) system, an ultra-reliable and low latency communications (ultra-reliable and low latency communications, URLLC) system, a satellite communication system, an LTE-machine-to-machine (LTE-machine-to-machine, LTE-M) system, a future 6th generation (6th generation, 6G) mobile communication system, and the like.

It should be noted that, in embodiments of this application, the term "communication" may also be described as "data transmission", "signal transmission", "information transmission", "transmission", or the like. In embodiments of this application, transmission may include sending or receiving. For example, transmission may be uplink transmission. For example, a terminal device may send a signal to a network device. Alternatively, transmission may be downlink transmission. For example, the network device may send a signal to the terminal device.

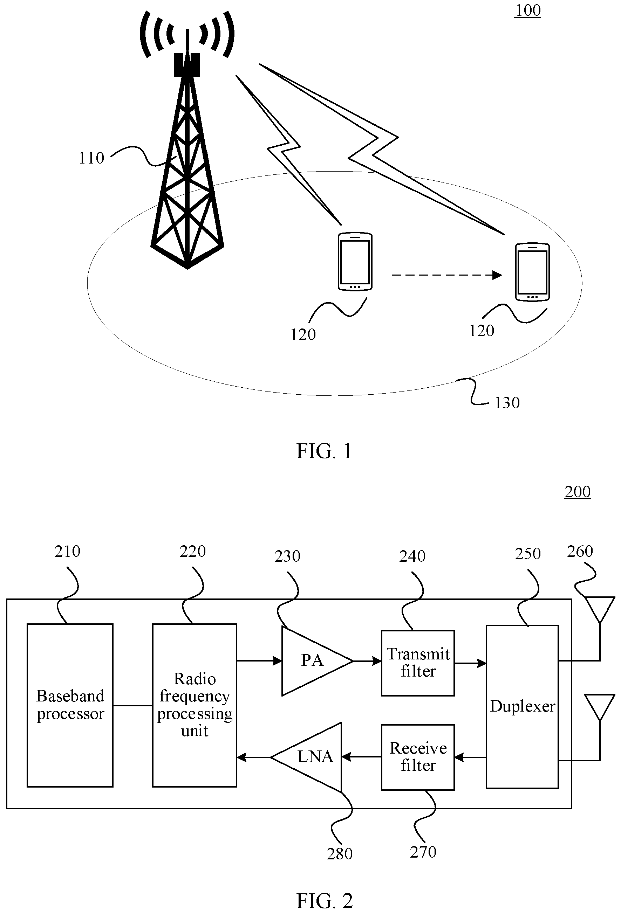

FIG. 1 is a diagram of a communication system. As shown in FIG. 1, the communication system 100 may include a network device 110 and a terminal device 120.

The network device 110 may be a device configured to communicate with the terminal device 120, for example, a base station configured to connect the terminal device 120 to a radio access network (radio access network, RAN). The base station may sometimes be referred to as an access network device or an access network node. It may be understood that a device having a base station function may have different names in systems using different radio access technologies. For ease of description, in embodiments of this application, apparatuses that may provide wireless communication and access functions for terminal devices are collectively referred to as a base station. In embodiments of this application, the network device 110 includes but is not limited to an evolved NodeB (evolved NodeB, eNB or eNodeB) in LTE, a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), and an access point, a wireless relay node, a wireless backhaul node, a transmission point (transmission point, TP), a transmission and reception point (transmission and reception point, TRP), or the like in a wireless fidelity (wireless fidelity, Wi-Fi) system, or may be a next generation node base station (next generation node base station, gNB) or a transmission point (TRP or TP) in a 5G system, an antenna panel or an antenna panel group (including a plurality of antenna panels) of a base station in a 5G system, a network node that forms a gNB or a transmission point, such as a baseband unit (BBU) or a distributed unit (distributed unit, DU), a network device in a future 6G network, and the like.

In another possible scenario, a plurality of network devices collaborate to assist the terminal in implementing radio access, and different network devices each implement a part of functions of the base station. For example, the network device 110 may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH). For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, higher-layer signaling such as RRC layer signaling may also be considered as being sent by the DU or the DU+CU. It may be understood that the network device 110 may be a CU node, a DU node, or a device including a CU node and a DU node. In addition, the CU may be classified as a network device in an access network (radio access network, RAN) or a network device in a core network (core network, CN). This is not limited in this application.

In different systems, the CU (or the CU-CP and the CU-UP), the DU, or the RU may have different names, but a person skilled in the art may understand their meanings. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A specific technology and a specific device form that are used for the network device are not limited in embodiments of this application.

In embodiments of this application, an apparatus configured to implement a function of the network device may be the network device, or may be an apparatus that can support the network device in implementing the function, for example, a chip system. In embodiments of this application, an example in which the apparatus configured to implement the function of the network device is the network device and the network device is a base station is used to describe the technical solutions provided in embodiments of this application.

The terminal device 120 may be any device having a wireless transceiver function. The terminal device 120 may also be referred to as user equipment (user equipment, UE), an access terminal, a terminal, a subscriber unit, a subscriber station, a mobile station, a remote station, a remote terminal, a mobile device, a user terminal, a wireless network device, a user agent, or a user apparatus. In embodiments of this application, the terminal device 120 includes but is not limited to a cellular phone (cellular phone), a cordless phone, a session initiation protocol (session initiation protocol, SIP) phone, a smartphone (smartphone), a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an uncrewed aerial vehicle device, a terminal in the internet of things or the internet of vehicles, a terminal in any form in a future network, relay user equipment, a terminal in a future evolved public land mobile network (public land mobile network, PLMN), or the like. Alternatively, the terminal device 120 may be a virtual reality (virtual reality, VR) terminal device, an augmented reality (augmented reality, AR) terminal device, a terminal device in industrial control (industrial control), a terminal device in self-driving (self-driving), a terminal device in telemedicine (remote medical), a terminal device in a smart grid (smart grid), a terminal device in a smart city (smart city), a terminal device in a smart home (smart home), or the like. This is not limited in embodiments of this application.

In embodiments of this application, an apparatus configured to implement a function of the terminal device may be the terminal device, or may be an apparatus that can support the terminal device in implementing the function, for example, a chip system. The chip system may include a chip, or may include a chip and another discrete component. In embodiments of this application, an example in which the apparatus configured to implement the function of the terminal device is the terminal device and the terminal device is UE is used to describe the technical solutions provided in embodiments of this application.

It may be understood that FIG. 1 is merely a simplified diagram showing an example for ease of understanding, and the communication system 100 may further include other network devices or terminal devices not shown in FIG. 1.

The network device 110 and the terminal device 120 may communicate with each other through wireless links. A transmission link from the network device 110 to the terminal device 120 may be referred to as a downlink (downlink, DL) or a downlink channel, used to transmit downlink signals. A transmission link from the terminal device 120 to the network device 110 may be referred to as an uplink (uplink, UL) or an uplink channel, used to transmit uplink signals. For example, the network device 110 may send a downlink reference signal, for example, a cell-specific reference signal (cell-specific reference signal, CRS) or a UE-specific reference signal (UE-specific reference signal), to the terminal device 120 through the downlink channel for channel state information measurement, data demodulation, beam training, time-frequency parameter tracking, or the like. The terminal device 120 may send an uplink reference signal, for example, an SRS or a demodulation reference signal (demodulation reference signal, DMRS), to the network device 110 through the uplink channel for uplink and downlink channel measurement, data demodulation, or the like. The network device 110 and the terminal device 120 may further transmit downlink data and uplink data respectively through the downlink channel and the uplink channel.

In embodiments of this application, the network device 110 provides a service for a cell, for example, a cell 130 shown in FIG. 1, and the terminal device 120 communicates with the network device 110 by using a transmission resource (for example, a frequency domain resource, or referred to as a spectrum resource) used by the cell. The network device 110 may be a macro base station, a micro base station, a relay station, an access point, or the like. The cell 130 may belong to a macro base station, or a base station corresponding to a small cell (small cell). The small cell herein may include a metro cell (metro cell), a micro cell (micro cell), a pico cell (pico cell), a femto cell (femto cell), or the like. The small cell is relative to a macro cell (macro cell). The macro cell usually has a large coverage area (for example, having a radius of more than 500 meters) and high transmit power, while the small cell is characterized by a small coverage area (for example, having a radius of several tens of meters) and low transmit power, suitable for providing a high-rate data transmission service.

In addition, a plurality of cells may simultaneously work at a same frequency on a carrier in an LTE system or a 5G system, and in some special scenarios, it may be considered that a concept of the carrier is equivalent to a concept of the cell. For example, in a carrier aggregation (carrier aggregation, CA) scenario, when a secondary component carrier is configured for UE, a carrier index of the secondary component carrier and a cell identifier (cell identifier, Cell ID) of a secondary serving cell working on the secondary component carrier are both carried. In this case, it may be considered that the concept of the carrier is equivalent to the concept of the cell. For example, for the UE, accessing a carrier is equivalent to accessing a cell.

A plurality of antennas (antennas, ANTs) may be configured for the network device 110 or the terminal device 120 for communication. The plurality of antennas may include at least one transmit antenna (transmitter, Tx) for sending signals and at least one receive antenna (receiver, Rx) for receiving signals. In addition, the network device 110 or the terminal device 120 may additionally include a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving.

FIG. 2 is a diagram of a structure of a terminal device. The terminal device 200 shown in FIG. 2 may be a specific example of the terminal device 120 in FIG. 1. As shown in FIG. 2, the terminal device 200 may include a baseband processor 210, a radio frequency processing unit 220, a power amplifier (power amplifier, PA) 230, a low noise amplifier (low noise amplifier, LNA) 280, a transmit filter 240, a receive filter 270, a duplexer 250, an antenna 260, and the like.

The antenna 260 is configured to receive and transmit radio frequency signals. The duplexer 250 is configured to separate transmitted signals from received signals. The power amplifier 230 is located on a transmit path, and configured to amplify to-be-transmitted signals. The low noise amplifier 280 is located on a receive path, and configured to amplify signals received by the antenna. The radio frequency processing unit 220 is configured to process radio frequency signals, for example, perform frequency mixing and demodulation processing on received radio frequency signals, or convert to-be-sent data signals into radio frequency signals. The baseband processor 210 is configured to receive baseband signals, and perform processing such as demodulation, interleaving, decryption, and channel decoding; or perform processing such as encoding, interleaving, encryption, and modulation on data that needs to be sent, to form baseband signals.

When receiving a signal, the antenna 260 converts a high-frequency electromagnetic wave sent by a network device, for example, a base station, into a high-frequency signal current, and sends the high-frequency signal current to the duplexer 250. The duplexer 250 has different frequency bands, which can filter frequencies for both transmitted signals (that is, sent signals) and received signals, and prevent signals from flowing from a transmit circuit (that is, a sending circuit) to a receive circuit. Herein, the duplexer 250 is mainly configured to isolate transmitted signals from received signals, to ensure normal reception and transmission at the same time. The received signal that passes through the duplexer 250 is sent to the receive filter 270. The receive filter 270 allows radio frequency signals on a receive band to enter the receive circuit, and suppresses signals on other bands. A radio frequency signal obtained through processing by the receive filter 270 is sent to the low noise amplifier 280. The low noise amplifier 280 can amplify a weak radio frequency signal, to improve a signal to noise ratio of a receiver. The amplified radio frequency signal is sent to the radio frequency processing unit 220 for processing, to obtain a baseband signal. The baseband signal is sent to the baseband processor 210 for processing. For example, the baseband signal is demodulated and decoded, and a decoded digital signal is transmitted to an upper-layer system. Correspondingly, a receiver chain of the terminal device 200 may include the antenna 260, the duplexer 250, the receive filter 270, the low noise amplifier 280, the radio frequency processing unit 220, the baseband processor 210, and the like.

A process of transmitting a signal is opposite to the process of receiving the signal. When transmitting a signal, the baseband processor 210 processes a to-be-sent data signal to obtain a baseband signal, and sends the baseband signal to the radio frequency processing unit 220. The radio frequency processing unit 220 converts the baseband signal into a radio frequency signal, and sends the radio frequency signal to the power amplifier 230. The power amplifier 230 can amplify a weak radio frequency signal, to meet a requirement of transmit power. After the amplified radio frequency signal is sent to the transmit filter 240 and the duplexer 250 in sequence, the antenna 260 radiates the radio frequency signal into space. Correspondingly, a transmitter chain of the terminal device 200 may include the baseband processor 210, the radio frequency processing unit 220, a power amplifier 230, the transmit filter 240, the duplexer 250, the antenna 260, and the like.

It should be understood that the transmitter chain or the receiver chain of the terminal device may further include other components such as an antenna matching circuit, a multiplexer, and a demultiplexer. This is not limited in embodiments of this application.

When a plurality of antennas are configured for the network device 110 and the terminal device 120, the network device 110 and the terminal device 120 may communicate with each other by using a multiple-input multiple-output (multi-input multi-output, MIMO) technology (also referred to as a multi-antenna technology). In the MIMO technology, a transmit end and a receive end respectively transmit and receive signals through a plurality of transmit antennas and a plurality of receive antennas. For example, in NR, based on a capability of the terminal device, the terminal device may support the following configurations of the number of Tx antennas and the number of Rx antennas, including 1T2R, 2T4R, 1T4R, 2TR, 4T4R, or the like, where T represents a transmit antenna, R represents a receive antenna, 1T2R represents that the terminal device has one transmit antenna and two receive antennas, and other antenna configurations can be deduced by analogy. When the terminal device has more than one transmit antenna, the terminal device can support uplink MIMO. Correspondingly, when the terminal device has more than one receive antenna, the terminal device can support downlink MIMO.

For ease of understanding embodiments of this application, several concepts that may be related below are briefly described.

### 1. SRS

A reference signal (reference signal, RS) may be referred to as a "pilot" signal, which is a known signal provided by a transmit end to a receive end for channel estimation or channel sounding. Reference signals may be classified into an uplink reference signal and a downlink reference signal.

The uplink reference signal may be a signal sent by a terminal device to a network device, that is, the transmit end is the terminal device, and the receive end is the network device. The uplink reference signal is used for two purposes: uplink channel estimation (for coherent demodulation and detection of the network device or precoding calculation) and uplink channel quality measurement. The uplink reference signal may include a DMRS and an SRS. The SRS may be used to estimate uplink channel quality, select a channel, calculate a signal to interference plus noise ratio (signal to interference plus noise ratio, SINR) of an uplink channel, and obtain an uplink channel coefficient. In a TDD scenario, due to reciprocity between uplink and downlink channels, the SRS may be further used to obtain a downlink channel coefficient. The uplink/downlink channel coefficient estimated by the base station based on the SRS may be used to determine an uplink/downlink precoding matrix, thereby increasing an uplink/downlink transmission rate and increasing a system capacity.

For example, a terminal device having four receive antennas (it is assumed that the terminal device has four radio frequency links and a 4-antenna sending capability, usually referred to as a 4T4R terminal) may simultaneously send SRS signals of four ports, where each port corresponds to one receive antenna. The network device may perform channel measurement based on the SRSs of the four ports sent by the terminal device, to obtain uplink channels corresponding to the four antennas of the terminal device, and may obtain downlink channels of the four receive antennas corresponding to the terminal device based on reciprocity between uplink and downlink channels.

The terminal device may indicate, by using a parameter "multiple-input multiple-output codebook PUSCH" (mimo-CB-PUSCH), whether the terminal device supports PUSCH MIMO transmission. If the terminal device supports PUSCH MIMO transmission, the parameter further includes two fields: One field is a "maximum number of codebook-based PUSCH multiple-input multiple-output layers" (maxNumberMIMO-LayersCB-PUSCH), indicating a maximum number of MIMO layers supported in codebook-based PUSCH transmission. For example, a terminal device that supports 4T antenna ports reports a maximum number of layers supported by the terminal device as 4 in the field. The other field is a maximum number of preconfigured SRS resources (maxNumberSRS-ResourcePerSet), used to define a maximum number of SRS resources in each SRS resource set configured for the terminal device for codebook-based transmission.

### 2. SRS usage (usage)

For example, the current protocol defines four SRS usages: an antenna switching (antenna switching, AS) usage, a codebook (codebook) usage, a non-codebook (non-codebook) usage, and a beam management (beam management) usage. A codebook SRS is used for uplink transmission of a codebook. An antenna switching SRS is used to enable, based on channel reciprocity, the base station to obtain downlink channel information, and calculate a series of necessary information such as a precoding weight for downlink transmission.

In codebook-based uplink transmission, the base station configures, for UE, an SRS resource set (SRS resource set) with the codebook usage. One SRS resource set may include one or more SRS resources. The UE may send an SRS based on a configuration parameter of the one or more SRS resources. The base station receives the SRS, and then performs channel measurement. If there are more than one SRS resource, the base station may select an SRS resource set with an optimal channel condition from the plurality of SRS resources, and indicate the SRS resource set to the UE by using an SRS resource indicator (SRS resource indicator, SRI) field in downlink control information (downlink control information, DCI). The base station may further calculate, based on a channel result measured in the SRS resource set, a precoding matrix for uplink sending, and indicate the precoding matrix to the UE. After receiving the indication, the UE may send a PUSCH signal based on the indicated SRS resource and precoding matrix.

A precoding matrix set is defined in the current protocol. The base station may determine the precoding matrix, and indicate an index (index) corresponding to the precoding matrix to the UE by using downlink control information (DCI). The UE may determine the precoding matrix based on the index.

The UE may indicate, by using a parameter "SRS transmit antenna switching" (srs-TxSwitch), "srs-TxSwitch-v1610", or "SRS antenna switching for more than four transmit antennas-release 17" (srs-AntennaSwitchingBeyond4RX-r17), a related UE capability of the UE for the antenna switching SRS. If the UE indicates "t1r2", it indicates that the UE supports SRS antenna selection (or antenna switching) of 1T2R.

The antenna switching function of the SRS may be used in a scenario in which the number of Tx antennas (or referred to as "transmit antennas") of a terminal device is less than the number of Rx antennas (or referred to as "receive antennas") in TDD, which may also be understood as that the number of radio frequency (radio frequency, RF) links and the number of power amplifiers of the terminal device are less than the number of antennas. Because the number of transmit antennas of the terminal device is less than the number of receive antennas, when the network device measures, by using an SRS, a channel state of a downlink channel corresponding to a receive antenna, the terminal device needs to send SRSs corresponding to the receive antennas to the network device in an antenna switching (which may also be referred to as antenna polling or antenna selection) manner through a transmit antenna, so that the network device can estimate channel states corresponding to all the receive antennas. To be specific, for SRS resources in an SRS resource set for antenna switching, a Tx channel that can be sent is sent through one SRS resource each time, and then the terminal device switches to other Rx channels, and sends SRS resources for remaining Rx channels, where these SRS resources are sent on different orthogonal frequency division multiplexing (orthogonal frequency division multiplexing, OFDM) symbols. The SRS resources are sent on different antennas in turn, so that the network device can obtain channel state information of all the Rx channels.

For example, a 1T4R terminal device has four antennas, but only one radio frequency link. In this case, to obtain complete channel information corresponding to all the antennas, the 1T4R terminal device needs to send SRSs through switching between different antennas at different moments, that is, SRS antenna selection. For example, four SRS resources may be configured for the terminal device, and each SRS resource corresponds to one antenna. At different SRS sending moments, the configured four SRS resources are sent on the four antennas in turn. Therefore, at least four times of SRS sending are required to obtain channel information corresponding to the four antennas. It may be understood that one antenna corresponds to one antenna port.

Similarly, a 2T4R terminal device has four antennas and two radio frequency links configured. Two SRS resources may be configured for the terminal device, each SRS resource corresponds to one group of antennas, and each group of antennas includes two antennas. At different SRS sending moments, the configured two SRS resources are sent on two groups of antennas in turn. Therefore, at least two times of SRS sending are required to obtain channel information corresponding to the four antennas. It may be understood that one group of antennas including two antennas corresponds to one antenna port.

### 3. Antenna port (antenna port, AP)

The antenna port is a logical concept, which is a logical port for transmission. The antenna port may also be referred to as a port, an SRS port, or an SRS antenna. One antenna port may be one physical transmit antenna or a combination of a plurality of physical transmit antennas. In the two cases, a receiver (receiver) usually does not separate signals from a same antenna port, because from a perspective of the receiver, an RS corresponding to the antenna port defines the antenna port regardless of whether the signals are formed by a single physical transmit antenna or are combined by a plurality of physical transmit antennas. When the RS is an SRS, the network device may obtain channel estimation of the antenna port based on an SRS sent by the terminal device. The antenna port may be used to carry the SRS signal, each antenna port corresponds to one SRS signal, and different ports may be multiplexed in a code division manner, a frequency division manner, a time division manner, or a space division manner.

It should be noted that, in a scenario in which the antenna port is used to send a PUSCH, the antenna port may also be referred to as a PUSCH port (or PUSCH antenna port).

### 4. SRS resource (resource) and SRS resource set (resource set)

Generally, one SRS resource set includes one or more SRS resources for transmitting an SRS. For example, one SRS resource may include one, two, or four antenna ports. When the number of antenna ports is 1, each antenna port corresponds to one configured time domain, frequency domain, and code domain resource (also referred to as a time-frequency-code resource). When the number of antenna ports is 2, every two antenna ports correspond to one configured time-frequency-code resource. When the number of antenna ports is 4, every four antenna ports correspond to one configured time-frequency-code resource.

### 5. SRS transmit (or send) power control

When a system bandwidth is large, due to limited transmit power of the UE, the UE usually cannot send a full-bandwidth SRS on one symbol, but needs to send SRSs on a plurality of symbols through frequency hopping, to obtain channel information of the full bandwidth. Currently, in the NR protocol, SRSs can be sent on a plurality of consecutive symbols through frequency hopping.

The UE may equally (equally) split (split) a linear value *P̂_{S,R,S,b,f,c}*(*i*, *qₛ*, *l*) of transmit power *P_{S,R,S,b,f,c}*(*i*, *qₛ*, *l*) to configured SRS ports, where *b* represents a bandwidth part (bandwidth part, BWP), *f* represents a carrier, *c* represents a cell, *i* represents an SRS transmission occasion, *qₛ* represents an index of a reference signal for path loss measurement, and *l* represents an index of an SRS power control adjustment state (or referred to as closed-loop power control).

### 6. PUSCH transmit (or send) power control

The UE may distribute PUSCH transmit power in PUSCH ports.

For example, the UE may first scale the calculated PUSCH transmit power, that is, multiply the PUSCH by a scaling coefficient s. The UE may equally split the PUSCH transmit power multiplied by the scaling coefficient s to PUSCH ports with non-zero transmit power. The scaling coefficient s may be defined as a ratio of the number of PUSCH ports with non-zero transmit power to a maximum number of SRS ports supported by the UE in an SRS resource. This can prevent power distributed to a PUSCH port from exceeding a PA capability of the PUSCH port.

For example, it is assumed that total transmit power of UE with 4Tx is 23 dBm, PA power of each PUSCH port is 17 dBm, and a maximum number of ports supported by the UE in an SRS resource is 4. It is assumed that the base station indicates a precoding matrix $\frac{1}{2} {\left[1010\right]}^{T}$ and transmit power 23 dBm to the UE. In this case, the number of PUSCH ports with non-zero transmit power is 2, that is, two PUSCH ports can be used to transmit the PUSCH. In this case, the scaling coefficient is s=2/4=1/2, and the UE may multiply the total transmit power 23 dBm by 1/2 and then equally distribute the power to the two antenna ports, where transmit power of each antenna port is exactly 17 dBm. If no scaling operation is performed, transmit power distributed to each PUSCH port is 20 dBm, which actually exceeds the capability of the UE. However, in a possible case, if the power of all the four PAs of the UE is 23 dBm, such processing actually reduces the PUSCH transmit power by 3 dBm, degrading coverage performance of the PUSCH.

Currently, in the NR protocol, terminal devices support 1T, 2T, 4T, or 8T antenna ports for uplink transmission. A network device may configure SRS resources with one, two, four, or eight SRS ports for a terminal device. For example, when a terminal device supports 2T uplink transmit antenna ports, the network device may configure one or two SRS resource sets for the terminal device, where each SRS resource set may include one or two SRS resources, and each SRS resource includes two SRS ports. The network device receives SRSs from the terminal device to measure the 2T channels, calculate a precoding matrix, and indicate the precoding matrix to the terminal device.

However, when the terminal device supports other numbers of antenna ports, the network device cannot perform channel measurement or precoding indication.

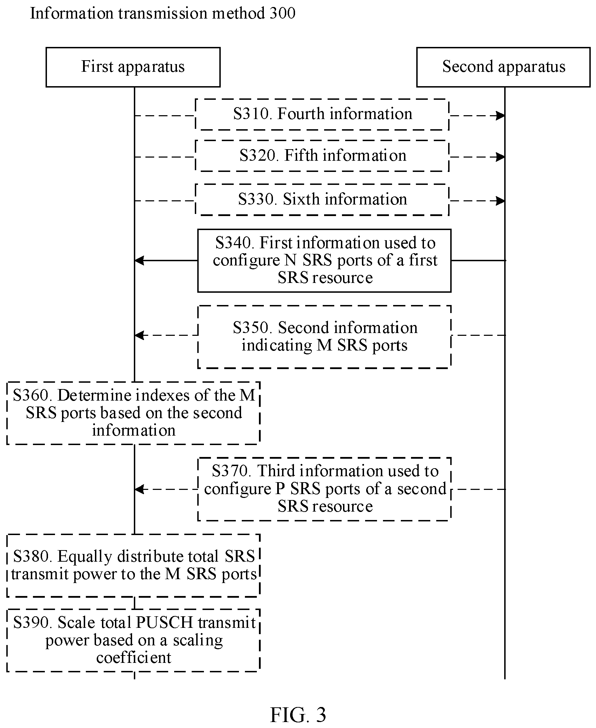

FIG. 3 is a schematic flowchart of an information transmission method 300 according to an embodiment of this application. According to the method 300, a network device can perform channel measurement when a terminal device supports other numbers of antenna ports, thereby improving communication flexibility. The following describes the method 300 with reference to FIG. 3.

S340. A first apparatus receives first information from a second apparatus. Correspondingly, the second apparatus sends the first information to the first apparatus.

The method 300 may be performed by the first apparatus, a component (for example, a processor, a chip, or a chip system) in the first apparatus, or a logical module or software that can implement all or a part of functions of the first apparatus. Optionally, the first apparatus may be a terminal device.

The method 300 may be performed by the second apparatus, a component (for example, a processor, a chip, or a chip system) in the second apparatus, or a logical module or software that can implement all or a part of functions of the second apparatus. Optionally, the second apparatus may be a network device.

Optionally, the first information is used to configure N SRS ports of a first SRS resource, and N may be a positive integer greater than 2.

A name of the first information is not limited in this application, and the first information may also be referred to as configuration information or other names.

The first SRS resource may be one or more SRS resources. For example, the first SRS resource may be one or more SRS resources in an SRS resource set. For another example, the first SRS resource may be a subset of an SRS resource set, and the subset of the SRS resource set includes one or more SRS resources.

Optionally, the first information indicates (or is used to configure) a first SRS resource set, the first SRS resource set includes the first SRS resource, and the first SRS resource includes the N SRS ports.

The N SRS ports of the first SRS resource may be understood as that the N SRS ports correspond to the first SRS resource. For example, the first SRS resource may include indexes of the N SRS ports. In this way, the N SRS ports correspond to the first SRS resource. Alternatively, the N SRS ports of the first SRS resource may be understood as the first SRS resource indicating the N SRS ports.

In this application, the N SRS ports may also be referred to as first SRS ports, and N may also be referred to as the number of first SRS ports. Correspondingly, the first information is used to configure the first SRS ports or the number of first SRS ports. The N SRS ports may also be referred to as SRS ports indicated by the first information, or SRS ports of an SRS resource configured by the network device.

Optionally, M of the N SRS ports are used to send an SRS, and M is a positive integer less than N. In other words, a part of the N SRS ports are used to send an SRS.

It may be understood that the first apparatus may send an SRS through the M SRS ports, and the first apparatus may not send an SRS through a port other than the M SRS ports in the N SRS ports. In other words, the first apparatus may send an SRS through a part of the N SRS ports.

In this application, the M SRS ports may also be referred to as second SRS ports, and M may also be referred to as the number of second SRS ports. The second SRS ports are a part of the first SRS ports. The number of second SRS ports is less than the number of first SRS ports.

The foregoing solution may also be expressed as follows: The second SRS ports are used to send an SRS, or the first apparatus sends an SRS through the second SRS ports. The foregoing solution may also be expressed as follows: A part of the first SRS ports are used to send an SRS, or a part of the SRS ports indicated by the first information are used to send an SRS, or a part of the SRS ports configured by the network device are used to send an SRS. The foregoing solution may also be expressed as follows: The first apparatus sends an SRS through a part of the first SRS ports; or the first apparatus sends an SRS through a part of the SRS ports indicated by the first information; or the first apparatus sends an SRS through a part of the SRS ports configured by the network device.

Optionally, the method 300 includes: The first apparatus sends an SRS through the M SRS ports.

A manner of determining the M SRS ports is not limited in this application. In an optional implementation, the M SRS ports may be predefined, or may be determined according to a predefined rule. For example, a protocol specifies that the first M SRS antenna ports among the N SRS antenna ports are used to send an SRS. For another example, a protocol specifies a rule for determining the M SRS ports used to send an SRS. In another optional implementation, the M SRS ports may be indicated by the second apparatus (for example, a network device). For example, the second apparatus sends indication information to the first apparatus to indicate the M SRS ports. Alternatively, the second apparatus sends indication information to the first apparatus to indicate a rule for determining the M SRS ports.

According to the foregoing embodiment, the first apparatus may send an SRS through a part of SRS ports configured by the second apparatus. The number of the part of SRS ports may be equal to the number of antenna ports supported by the first apparatus. Therefore, in this solution, when the first apparatus supports other numbers of antenna ports, the second apparatus can perform channel measurement on the corresponding numbers of SRS ports, thereby improving communication flexibility.

Optionally, N=4 and M=3.

A manner of determining three SRS ports is not limited in this application. In an optional implementation, three SRS ports may be predefined, or may be determined according to a predefined rule. For example, the second apparatus configures four SRS ports, and a protocol specifies that one of the four SRS ports is not used to send an SRS, or that three of the four SRS ports are used to send SRSs. In another optional implementation, three SRS ports may be indicated by the second apparatus (for example, a network device). For example, the second apparatus sends indication information to the first apparatus to indicate that one of the four SRS ports is not used to send an SRS, or three of the four SRS ports are used to send SRSs.

According to the foregoing embodiment, when the first apparatus supports 3T antenna ports, the second apparatus can implement channel measurement and precoding calculation on the three SRS ports, thereby improving communication flexibility.

Optionally, the indexes of the N SRS ports include a first index, a second index, a third index, and a fourth index. For example, the first index may be 1000, the second index may be 1001, the third index may be 1002, and the fourth index may be 1003. However, it should be noted that specific values of the first index, the second index, the third index, and the fourth index are not limited in this application, and the first index, the second index, the third index, and the fourth index may have other values.

Optionally, indexes of the M SRS ports include the first index, the second index, and the third index. For example, the indexes of the M SRS ports include 1000, 1001, and 1002. In other words, the SRS ports used by the first apparatus to send SRSs are the SRS port 1000, the SRS port 1001, and the SRS port 1002.

Optionally, the indexes of the M SRS ports include the first index, the second index, and the fourth index. For example, the indexes of the M SRS ports include 1000, 1001, and 1003. In other words, the SRS ports used by the first apparatus to send SRSs are the SRS port 1000, the SRS port 1001, and the SRS port 1003.

Optionally, the indexes of the M SRS ports include the first index, the third index, and the fourth index. For example, the indexes of the M SRS ports include 1000, 1002, and 1003. In other words, the SRS ports used by the first apparatus to send SRSs are the SRS port 1000, the SRS port 1002, and the SRS port 1003.

Optionally, the indexes of the M SRS ports include the second index, the third index, and the fourth index. For example, the indexes of the M SRS ports include 1001, 1002, and 1003. In other words, the SRS ports used by the first apparatus to send SRSs are the SRS port 1001, the SRS port 1002, and the SRS port 1003.

Names of the first index, the second index, the third index, and the fourth index are not limited in this application. The first index is used as an example. The first index may also be referred to as an SRS index, an SRS port index, or other names. The second index, the third index, and the fourth index are similar to the first index, and details are not described again.

Optionally, the method 300 further includes: (S350) The first apparatus receives second information from the second apparatus. Correspondingly, the second apparatus sends the second information to the first apparatus.

A message carrying the second information is not limited in this application. For example, the second information may be carried in an RRC message. For another example, the second information may be carried in another message.

A name of the second information is not limited in this application. For example, the second information may be referred to as configuration information, indication information, or other names.

Optionally, the second information indicates the M SRS ports.

A manner in which the second information indicates the M SRS ports is not limited in this application. In an optional implementation, the second information may include the indexes of the M SRS ports. For example, the second information may include 1000, 1001, and 1002, to indicate that the M SRS ports are the SRS port 1000, the SRS port 1001, and the SRS port 1002. In another optional implementation, the second information may include an index of the port other than the M SRS ports in the N SRS ports. For example, the N SRS ports are the SRS port 1000, the SRS port 1001, the SRS port 1002, and the SRS port 1003. The second information may include 1003, to indicate that the M SRS ports are the SRS port 1000, the SRS port 1001, and the SRS port 1002. In still another optional implementation, the second information may be in a form of a bitmap (bitmap). For example, when N=4, the second information may include 1110, to indicate that the first, second, and third SRS ports in the four SRS ports belong to the M SRS ports, and the fourth SRS port does not belong to the M SRS ports. In yet another optional implementation, the M SRS ports may correspond to an identifier. In this case, the second information may include the identifier, to indicate the M SRS ports. For example, the SRS port 1000, the SRS port 1001, and the SRS port 1002 correspond to an identifier #1, and the SRS port 1000, the SRS port 1001, and the SRS port 1003 correspond to an identifier #2. The second information may include the identifier #1, to indicate the SRS port 1000, the SRS port 1001, and the SRS port 1002. The foregoing example may also be understood as that there is a mapping relationship between the identifier #1 and the SRS port 1000, the SRS port 1001, and the SRS port 1002.

Optionally, the method 300 further includes: (S360) The first apparatus determines the indexes of the M SRS ports based on the second information.

According to the foregoing embodiment, the second apparatus may indicate the M SRS ports, so that the second apparatus can configure, as required, an SRS port used by the first apparatus to send an SRS, thereby further improving communication flexibility.

Optionally, the second information includes the fourth index, and S360 includes: The first apparatus determines, based on the second information, that the indexes of the M SRS ports include the first index, the second index, and the third index. In other words, the second information may indicate the index of the port other than the M SRS ports in the N SRS ports. For example, the second information includes 1003. In this case, the first apparatus determines, based on 1003, that SRS ports corresponding to indexes other than 1003, that is, the indexes 1000, 1001, and 1002, in the indexes of the N SRS ports belong to the M SRS ports.

Optionally, the second information includes the third index, and S360 includes: The first apparatus determines, based on the second information, that the indexes of the M SRS ports include the first index, the second index, and the fourth index. In other words, the second information may indicate the index of the port other than the M SRS ports in the N SRS ports. For example, the second information includes 1002. In this case, the first apparatus determines, based on 1002, that SRS ports corresponding to indexes other than 1002, that is, the indexes 1000, 1001, and 1003, in the indexes of the N SRS ports belong to the M SRS ports.

Optionally, the second information includes the second index, and S360 includes: The first apparatus determines, based on the second information, that the indexes of the M SRS ports include the first index, the third index, and the fourth index. In other words, the second information may indicate the index of the port other than the M SRS ports in the N SRS ports. For example, the second information includes 1001. In this case, the first apparatus determines, based on 1001, that SRS ports corresponding to indexes other than 1001, that is, the indexes 1000, 1002, and 1003, in the indexes of the N SRS ports belong to the M SRS ports.

Optionally, the second information includes the first index, and S360 includes: The first apparatus determines, based on the second information, that the indexes of the M SRS ports include the first index, the second index, and the third index. In other words, the second information may indicate the index of the port other than the M SRS ports in the N SRS ports. For example, the second information includes 1000. In this case, the first apparatus determines, based on 1000, that SRS ports corresponding to indexes other than 1000, that is, the indexes 1001, 1002, and 1003, in the indexes of the N SRS ports belong to the M SRS ports.

According to the foregoing embodiment, the second information may indicate an SRS port in the N SRS ports that is not used to send an SRS, so that the second information can occupy fewer bits, thereby saving resources.

Optionally, the second information includes the first index, the second index, and the third index, and S360 includes: The first apparatus determines, based on the second information, that the indexes of the M SRS ports include the first index, the second index, and the third index. In other words, the second information may include the indexes of the M SRS ports. For example, the second information includes 1001, 1002, and 1003. In this case, the first apparatus may determine, based on the second information, that the M SRS ports are the SRS port 1001, the SRS port 1002, and the SRS port 1003.

Optionally, the second information includes the first index, the second index, and the fourth index, and S360 includes: The first apparatus determines, based on the second information, that the indexes of the M SRS ports include the first index, the second index, and the fourth index. In other words, the second information may include the indexes of the M SRS ports. For example, the second information includes 1000, 1001, and 1003. In this case, the first apparatus may determine, based on the second information, that the M SRS ports are the SRS port 1000, the SRS port 1001, and the SRS port 1003.

Optionally, the second information includes the first index, the third index, and the fourth index, and S360 includes: The first apparatus determines, based on the second information, that the indexes of the M SRS ports include the first index, the third index, and the fourth index. In other words, the second information may include the indexes of the M SRS ports. For example, the second information includes 1000, 1002, and 1003. In this case, the first apparatus may determine, based on the second information, that the M SRS ports are the SRS port 1000, the SRS port 1002, and the SRS port 1003.

Optionally, the second information includes the first index, the second index, and the third index, and S360 includes: The first apparatus determines, based on the second information, that the indexes of the M SRS ports include the first index, the second index, and the third index. In other words, the second information may include the indexes of the M SRS ports. For example, the second information includes 1000, 1001, and 1002. In this case, the first apparatus may determine, based on the second information, that the M SRS ports are the SRS port 1000, the SRS port 1001, and the SRS port 1002.

According to the foregoing embodiment, the second information may include the indexes of the M SRS ports, and an SRS port that is not indicated in the first SRS resource may be multiplexed by another terminal device, thereby improving resource utilization.

Optionally, the method 300 further includes: (S370) The first apparatus receives third information from the second apparatus. Correspondingly, the second apparatus sends the third information to the first apparatus.

A name of the third information is not limited in this application, and the third information may also be referred to as configuration information or other names.

In an optional implementation, the third information and the first information may be carried in a same message. However, this is not limited in this application, and the third information and the first information may alternatively be separately carried in different messages.

Optionally, the third information is used to configure P SRS ports of a second SRS resource, P is a positive integer greater than 2, P=N, Q of the P SRS ports are used to send an SRS, Q is a positive integer less than P, and the Q SRS ports correspond to the M SRS ports.

The second SRS resource may be one or more SRS resources. For example, the second SRS resource may be one or more SRS resources in an SRS resource set. For another example, the second SRS resource may be a subset of an SRS resource set, and the subset of the SRS resource set includes one or two SRS resources. The second SRS resource may be different from the first SRS resource. In some optional implementations, the first SRS resource and the second SRS resource may belong to a same SRS resource set.

Optionally, the third information indicates (or is used to configure) the first SRS resource set, the first SRS resource set includes the second SRS resource, and the second SRS resource includes the P SRS ports. Optionally, the first information indicates (or is used to configure) the first SRS resource set, the first SRS resource set includes the first SRS resource and the second SRS resource, the first SRS resource includes the N SRS ports, and the second SRS resource includes the P SRS ports.

The P SRS ports of the second SRS resource may be understood as that the P SRS ports correspond to the second SRS resource. For example, the second SRS resource may include indexes of P SRS ports. In this way, the P SRS ports correspond to the second SRS resource. Alternatively, the P SRS ports of the second SRS resource may be understood as that the second SRS resource indicates the P SRS ports.

In this application, the P SRS ports may also be referred to as third SRS ports, and N may also be referred to as the number of third SRS ports. Correspondingly, the first information is used to configure the third SRS ports or the number of third SRS ports. The P SRS ports may also be referred to as SRS ports indicated by the third information, or SRS ports of another SRS resource configured by the network device.

It may be understood that the third SRS ports may be different from the first SRS ports. In other words, the P SRS ports may be different from the N SRS ports. For example, the SRS resource corresponding to the P SRS ports is different from the SRS resource corresponding to the N SRS ports.

It may be understood that the number of third SRS ports is the same as the number of first SRS ports. The second apparatus may configure, for the first apparatus by using the first information and the third information, two SRS resources (for example, the first SRS resource and the second SRS resource) with a same number of ports.

It should be noted that the first apparatus may send an SRS through the Q SRS ports, and the first apparatus may not send an SRS through a port other than the Q SRS ports in the P SRS ports. In other words, the first apparatus may send an SRS through a part of the P SRS ports.

In this application, the Q SRS ports may also be referred to as a fourth SRS port, and Q may also be referred to as the number of fourth SRS ports. The fourth SRS port is a part of the third SRS ports. The number of fourth SRS ports is less than the number of third SRS ports.

Optionally, the method 300 includes: The first apparatus sends an SRS through the Q SRS ports.

That the Q SRS ports correspond to the M SRS ports may be understood as that Q=M. To be specific, the second apparatus configures two SRS resources, and when the two SRS resources have a same number of SRS ports, the first apparatus may separately send SRSs through a same number of SRS ports in the two SRS resources. For example, the second apparatus configures the first SRS resource and the second SRS resource, and the first SRS resource and the second SRS resource each have four SRS ports. The first apparatus may send SRSs through three of the four SRS ports of the first SRS resource, and the first apparatus may send SRSs through three of the four SRS ports of the second SRS resource.

Alternatively, that the Q SRS ports correspond to the M SRS ports may be understood as that indexes (or referred to as numbers) of the Q SRS ports are the same as the indexes of the M SRS ports. For example, the second apparatus configures the first SRS resource and the second SRS resource, the indexes of the SRS ports of the first SRS resource are 1000, 1001, 1002, and 1003, and the indexes of the SRS ports of the second SRS resource are 1000, 1001, 1002, and 1003. If the first apparatus sends SRSs through the SRS ports 1000, 1001, and 1002 of the first SRS resource, the first apparatus may also send SRSs through the SRS ports 1000, 1001, and 1002 of the second SRS resource. In other words, SRS ports that correspond to the two SRS resources configured by the second apparatus and are not used to send SRSs have a same index. For example, the first apparatus does not send an SRS through the SRS port 1003 of the first SRS resource, and the first apparatus may not send an SRS through the SRS port 1003 of the second SRS resource, either.

The foregoing uses an example in which the second apparatus configures two SRS resources. A person skilled in the art may understand that this embodiment of this application is also applicable where the second apparatus configures more SRS resources.

According to the foregoing embodiment, when the second apparatus configures a plurality of SRS resources with a same number of antenna ports, SRS ports used to send SRSs in these SRS resources are associated with each other. When SRS ports used to send SRSs are predefined, after determining an SRS port used to send an SRS in one SRS resource, the first apparatus may determine, based on an association relationship, an SRS port used to send an SRS in another SRS resource, thereby reducing calculation overheads of the first apparatus. When SRS ports used to send SRSs are indicated by the second apparatus, the second apparatus may indicate only an SRS port used to send an SRS in one SRS resource, and does not need to indicate an SRS port used to send an SRS in another SRS resource, thereby reducing signaling overheads.

Optionally, the method 300 further includes: (S380) The first apparatus equally distributes total SRS transmit power to the M SRS ports.

The total SRS transmit power may be transmit power *P_{S,R,S,b,f,c}*(*i*, *qₛ*, *l*) or a linear value *P̂_{S,R,S,b,f,c}*(*i*, *qₛ*, *l*) of the transmit power. For other descriptions of *P_{S,R,S,b,f,c}*(*i*, *qₛ*, *l*), refer to the foregoing descriptions. Details are not described herein again.

A name of the total SRS transmit power is not limited in this application. For example, the total SRS transmit power may also be referred to as total SRS power, SRS transmit power, a linear value of SRS transmit power, or other names.

The term "equally distributing" may also be understood as equally splitting.

For example, the M SRS ports may be understood as SRS transmit ports of the first apparatus (for example, a terminal device), referred to as SRS transmit ports for short. That is, S380 may be expressed as follows: The first apparatus equally distributes the total SRS transmit power to the SRS transmit ports of the first apparatus.

It should be noted that in S380, the first apparatus equally distributes the total SRS transmit power to the M SRS ports rather than the N SRS ports. That is, the first apparatus does not equally distribute the total SRS transmit power to all the SRS ports configured by the second apparatus, but equally distributes the total SRS transmit power to the SRS ports used to send SRSs.

For example, an SRS resource in an SRS resource set configured for the first apparatus with a codebook or antenna switching usage includes four SRS ports. The first apparatus sends SRSs only through three of the four SRS ports. In other words, one of the SRS ports in the SRS resource is not used by the first apparatus to send an SRS. The first apparatus equally splits the linear value *P̂_{S,R,S,b,f,c}*(*i*, *qₛ*, *l*) of the transmit power *P_{S,R,S,b,f,c}*(*i*, *qₛ*, *l*) to the (three) actual SRS transmit ports on the active uplink BWP (active UL BWP) *b* of the carrier *f* of the cell *c*.

According to the foregoing embodiment, the first apparatus equally distributes the total SRS transmit power to the M SRS ports rather than the N SRS ports, so that actual SRS transmit power is increased. For example, when M=4 and N=3, if the total SRS transmit power is equally distributed to four SRS ports, power distributed to each SRS port is one quarter of the total SRS transmit power. In this embodiment of this application, the total SRS transmit power is equally distributed to three SRS ports, and power distributed to each SRS port is one third of the total SRS transmit power, so that SRS transmit power of each SRS port is increased.

Optionally, the M SRS ports respectively correspond to M PUSCH ports.

That the M SRS ports respectively correspond to the M PUSCH ports may be understood as that one of the M SRS ports corresponds to one of the M PUSCH ports, or may be understood as that the M SRS ports are in one-to-one correspondence with the M PUSCH ports.

For example, it is assumed that the M PUSCH ports are a PUSCH port 1000, a PUSCH port 1001, and a PUSCH port 1002.

For example, the M SRS ports are the SRS port 1000, the SRS port 1001, and the SRS port 1002, respectively corresponding to the PUSCH port 1000, the PUSCH port 1001, and the PUSCH port 1002.

For another example, the M SRS ports are the SRS port 1000, the SRS port 1001, and the SRS port 1003, respectively corresponding to the PUSCH port 1000, the PUSCH port 1001, and the PUSCH port 1002.

For still another example, the M SRS ports are the SRS port 1000, the SRS port 1002, and the SRS port 1003, respectively corresponding to the PUSCH port 1000, the PUSCH port 1001, and the PUSCH port 1002.

For still another example, the M SRS ports are the SRS port 1001, the SRS port 1002, and the SRS port 1003, respectively corresponding to the PUSCH port 1000, the PUSCH port 1001, and the PUSCH port 1002.

According to the foregoing embodiment, the M SRS ports respectively correspond to the M PUSCH ports, so that a PUSCH can be sent.

Optionally, the method 300 further includes: (S390) The first apparatus scales total PUSCH transmit power based on a scaling coefficient.

A name of the total PUSCH transmit power is not limited in this application. For example, the total PUSCH transmit power may also be referred to as total PUSCH power, PUSCH transmit power, a linear value of PUSCH transmit power, or other names.

The scaling the total PUSCH transmit power based on the scaling coefficient may be understood as multiplying the scaling coefficient by the total PUSCH transmit power.

Optionally, the scaling coefficient is equal to a ratio of the number of non-zero power PUSCH ports to M.

M may be a maximum number of actual transmit ports of the first apparatus in the SRS resource. In other words, the scaling coefficient is equal to a ratio of the number of non-zero power PUSCH ports to the maximum number of actual transmit ports of the first apparatus in the SRS resource. M may also be understood as the number of SRS transmit ports of the first apparatus (for example, a terminal device), referred to as the number of SRS transmit ports for short. In other words, the scaling coefficient is equal to a ratio of the number of non-zero power PUSCH ports to the number of SRS transmit ports. In other words, the scaling coefficient is equal to a ratio of the number of non-zero power PUSCH ports to the number of SRS transmit ports of the first apparatus. In other words, the scaling coefficient is equal to a ratio of the number of non-zero power PUSCH ports to the number of SRS transmit ports of the terminal device.

According to the foregoing embodiment, the first apparatus determines the scaling coefficient based on M, and then scales the total PUSCH transmit power based on the scaling coefficient, which avoids reducing actual PUSCH transmit power or prevents PUSCH transmit power from exceeding PA capabilities of different antenna ports.

Optionally, when all PAs of the first apparatus support signal sending at maximum transmit power, the first apparatus reports a capability (which may be referred to as a first capability) of the first apparatus to the second apparatus. In this case, the scaling coefficient of the PUSCH transmit power is 1.

Optionally, when no PA of the first apparatus supports signal sending at maximum transmit power, the first apparatus reports a capability (which may be referred to as a second capability) of the first apparatus to the second apparatus. In this case, the scaling coefficient of the PUSCH transmit power is the number of antenna ports with non-zero PUSCH transmit power divided by the maximum number of ports supported by the first apparatus in the SRS resource. That is, S390 is performed.

Optionally, when a part of PAs of the first apparatus support signal sending at maximum transmit power, the first apparatus reports a capability (which may be referred to as a third capability) of the first apparatus and a full-power (full-power) transmitted precoding matrix indicator (transmitted precoding matrix indicator, TPMI) to the second apparatus. In this case, the scaling coefficient of the PUSCH transmit power is 1. For a PA (that is, a remaining TPMI) that does not support signal sending at maximum transmit power, the scaling coefficient of the PUSCH transmit power is the number of antenna ports with non-zero PUSCH transmit power divided by the number of SRS ports, where the number of SRS ports is the number of SRS ports included in an SRS resource indicated by an SRI field in DCI.

For example, the full-power TPMI may be shown in Table 1.

**Table 1**

| Identifier (identifier, ID) | TPMI group (group) |
|---|---|
| 0 | $\frac{1}{\sqrt{3}} \left[\begin{matrix}1 \\ 0 \\ 0\end{matrix}\right]$ |
| 1 | $\frac{1}{\sqrt{3}} \left[\begin{matrix}1 \\ 0 \\ 0\end{matrix}\right]$ $\frac{1}{\sqrt{3}} \left[\begin{matrix}0 \\ 1 \\ 0\end{matrix}\right]$ $\frac{1}{\sqrt{3}} \left[\begin{matrix}10 \\ 01 \\ 00\end{matrix}\right]$ |
| 2 | $\frac{1}{\sqrt{3}} \left[\begin{matrix}1 \\ 0 \\ 0\end{matrix}\right]$ $\frac{1}{\sqrt{3}} \left[\begin{matrix}0 \\ 0 \\ 1\end{matrix}\right]$ $\frac{1}{\sqrt{3}} \left[\begin{matrix}10 \\ 00 \\ 01\end{matrix}\right]$ |
| 3 | $\frac{1}{\sqrt{3}} \left[\begin{matrix}0 \\ 1 \\ 0\end{matrix}\right]$ $\frac{1}{\sqrt{3}} \left[\begin{matrix}0 \\ 0 \\ 1\end{matrix}\right]$ $\frac{1}{\sqrt{3}} \left[\begin{matrix}00 \\ 10 \\ 01\end{matrix}\right]$ |

It should be noted that Table 1 is merely an example, and does not constitute a limitation on this application.

Optionally, S390 includes: When the first apparatus reports the second capability to the second apparatus, the first apparatus scales the total PUSCH transmit power based on the scaling coefficient, where the scaling coefficient is equal to the ratio of the number of non-zero power PUSCH ports to M.

Optionally, S390 includes: When the first apparatus reports the third capability to the second apparatus, the first apparatus scales the total PUSCH transmit power based on the scaling coefficient, where the scaling coefficient is equal to the ratio of the number of non-zero power PUSCH ports to M.

Optionally, S390 includes: When the first apparatus does not report a related capability (for example, the first capability, the second capability, or the third capability) or a related parameter (for example, a parameter of the first capability, a parameter of the second capability, or a parameter of the third capability) to the second apparatus, the first apparatus scales the total PUSCH transmit power based on the scaling coefficient, where the scaling coefficient is equal to the ratio of the number of non-zero power PUSCH ports to M.

According to the foregoing embodiment, the first apparatus determines the scaling coefficient based on the UE capability, and then scales the total PUSCH transmit power based on the scaling coefficient, which avoids reducing actual PUSCH transmit power or prevents PUSCH transmit power from exceeding PA capabilities of different antenna ports.

Optionally, the method 300 further includes: (S310) The first apparatus sends fourth information to the second apparatus. Correspondingly, the second apparatus receives the fourth information from the first apparatus.

A message carrying the fourth information is not limited in this application. For example, the fourth information may be carried in any message.

A name of the fourth information is not limited in this application. For example, the fourth information may be referred to as capability information, indication information, or other names.

Optionally, the fourth information indicates that a maximum number of codebook-based PUSCH multiple-input multiple-output layers supported by the first apparatus is M.

For example, the fourth information may be carried in a field "maximum number of codebook-based PUSCH multiple-input multiple-output layers" (maxNumberMIMO-LayersCB-PUSCH). For example, for the first apparatus that supports 3T antenna ports, the fourth information may indicate 3, that is, indicate that the maximum number of layers supported by the first apparatus is 3.

S310 may also be understood as that the first apparatus reports an MT capability to the second apparatus. For example, the first apparatus reports a 3T capability to the second apparatus.

According to the foregoing embodiment, the second apparatus can learn of the number of antenna ports supported by the first apparatus, to perform subsequent processing.

Optionally, the method 300 further includes: (S320) The first apparatus sends fifth information to the second apparatus. Correspondingly, the second apparatus receives the fifth information from the first apparatus.

A message carrying the fifth information is not limited in this application. For example, the fifth information may be carried in any message.

A name of the fifth information is not limited in this application. For example, the fifth information may be referred to as capability information, indication information, or other names.

Optionally, the fifth information indicates that a maximum number of SRS ports supported by the first apparatus in an SRS resource is M.

For example, for the first apparatus that supports 3T antenna ports, the fifth information may indicate 3, that is, indicate that the maximum number of SRS ports supported by the first apparatus in the SRS resource is 3.

Optionally, the method 300 further includes: (S330) The first apparatus sends sixth information to the second apparatus. Correspondingly, the second apparatus receives the sixth information from the first apparatus.

A message carrying the sixth information is not limited in this application. For example, the sixth information may be carried in any message.

A name of the sixth information is not limited in this application. For example, the sixth information may be referred to as capability information, indication information, or other names.

Optionally, the sixth information indicates an antenna switching capability supported by the first apparatus, and the sixth information is tMrM, tMr4, or tMr8.

tMrM may be understood as M transmit and M receive, that is, indicates that the first apparatus supports an antenna switching capability of M transmit and M receive. tMr4 may be understood as M transmit and 4 receive, that is, indicates that the first apparatus supports an antenna switching capability of M transmit and 4 receive. tMr8 may be understood as M transmit and 8 receive, that is, indicates that the first apparatus supports an antenna switching capability of M transmit and 8 receive.

For example, for the first apparatus that supports 3T antenna ports, the sixth information may indicate t3r3, t3r4, or t3r8, that is, indicate that the first apparatus supports an antenna switching capability of M transmit and M receive, M transmit and 4 receive, or M transmit and 8 receive.

Optionally, the method 300 further includes: The first apparatus sends seventh information to the second apparatus. Correspondingly, the second apparatus receives the seventh information from the first apparatus.

A message carrying the seventh information is not limited in this application. For example, the seventh information may be carried in any message.

A name of the seventh information is not limited in this application. For example, the seventh information may be referred to as capability information, indication information, or other names.

Optionally, the seventh information indicates that the number of uplink antenna ports supported by the first apparatus is M.

For example, for the first apparatus that supports 3T antenna ports, the seventh information may indicate 3, that is, indicate that the number of uplink antenna ports supported by the first apparatus is 3.

The following describes apparatus embodiments corresponding to the method embodiments of this application. The following merely briefly describes apparatuses. For specific implementation steps and details of the solutions, refer to the foregoing method embodiments.

To implement functions in the method provided in this application, a communication apparatus may include a hardware structure and/or a software module, to implement the functions in a form of the hardware structure, the software module, or the hardware structure plus the software module. For the functions, whether a function is performed by using the hardware structure, the software module, or the hardware structure plus the software module depends on particular application and design constraints of the technical solutions.

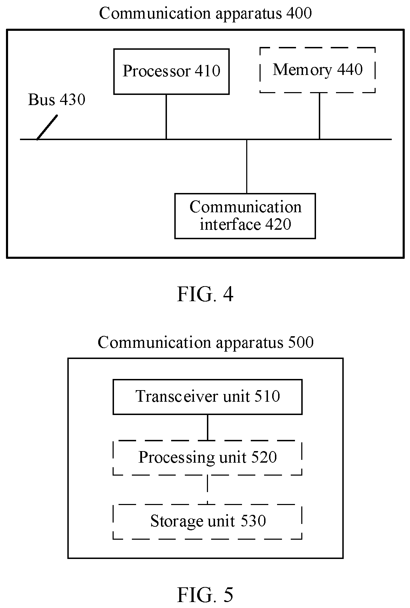

FIG. 4 is a block diagram of a communication apparatus 400 according to an embodiment of this application. The communication apparatus 400 includes a processor 410 and a communication interface 420. The processor 410 and the communication interface 420 may be connected to each other through a bus 430. The communication apparatus 400 may be a first apparatus or a second apparatus. For example, the first apparatus may be a terminal device, and the second apparatus may be a network device.

Optionally, the communication apparatus 400 may further include a memory 440. The memory 440 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 440 is configured to store related instructions and data. The memory 440 may be integrated with the processor 410, or may be disposed separately.

The processor 410 may be one or more central processing units (central processing units, CPUs). When the processor 410 is one CPU, the CPU may be a single-core CPU or a multicore CPU. The processor 410 may be a signal processor, a chip, or another integrated circuit that can implement the method in this application, or may be a partial circuit configured to perform a processing function in the processor, chip, or integrated circuit. In addition, the communication interface 420 may be an input/output interface configured to input or output signals or data, or may be an input/output circuit.

For example, the communication apparatus 400 is a first apparatus, and the processor 410 is configured to perform the following operation: receiving first information, where the first information is used to configure N SRS ports of a first SRS resource, M of the N SRS ports are used to send an SRS, N is a positive integer greater than 2, and M is a positive integer less than N.

For example, the communication apparatus 400 is a second apparatus, and the processor 410 is configured to perform the following operation: sending first information, where the first information is used to configure N SRS ports of a first SRS resource, M of the N SRS ports are used to send an SRS, N is a positive integer greater than 2, and M is a positive integer less than N.

The foregoing content is merely used as example descriptions. The communication apparatus 400 is responsible for performing methods or steps related to the first apparatus or the second apparatus in the foregoing method embodiments.

It may be understood that the communication interface 420 may also be referred to as a transceiver. The transceiver may include a transmitter and a receiver. The transmitter is configured to perform a sending operation, and the receiver is configured to perform a receiving operation. For example, the processor 410 is configured to control the transceiver to receive and/or send signals.

It should be noted that the communication apparatus 400 may include the transmitter but not include the receiver. Alternatively, the communication apparatus 400 may include the receiver but not include the transmitter. This may be specifically determined depending on whether the solution performed by the communication apparatus 400 includes a sending action and a receiving action.

The foregoing descriptions are merely example descriptions. For specific content, refer to the foregoing method embodiments. Further, for implementation of the operations in FIG. 4, refer to corresponding descriptions in the method embodiment shown in FIG. 3.

For example, the communication apparatus 400 may be configured to perform the solution shown in FIG. 3.

For example, the communication apparatus 400 is a first apparatus, and the communication interface 420 may be configured to receive first information.

For example, the communication apparatus 400 is a second apparatus, and the communication interface 420 may be configured to send first information.

For details of other implementations, refer to detailed descriptions of the embodiment shown in FIG. 3. Details are not described herein again. It should be understood that specific processes of performing the foregoing corresponding processes by the components are described in detail in the foregoing method embodiments. For brevity, details are not described herein again.

FIG. 5 is a block diagram of another communication apparatus 500 according to an embodiment of this application. The communication apparatus 500 may be a second apparatus, a first apparatus, or a chip or module in the second apparatus or the first apparatus, which is configured to implement the method in the embodiment shown in FIG. 3. For details, refer to related descriptions in the foregoing method embodiment.

The communication apparatus 500 includes a transceiver unit 510. The following describes the transceiver unit 510 for example.

The transceiver unit 510 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. This applies throughout and is not repeated below. The transceiver unit 510 may implement a corresponding communication function. The transceiver unit 510 may also be referred to as a communication interface or a communication module.

It should be noted that the communication apparatus 500 may include the sending unit but not include the receiving unit. Alternatively, the communication apparatus 500 may include the receiving unit but not include the sending unit. This may be specifically determined depending on whether the solution performed by the communication apparatus 500 includes a sending action and a receiving action.

For example, the transceiver unit 510 is configured to receive first information and the like.

Optionally, the communication apparatus 500 may further include a processing unit 520, configured to perform content related to steps such as processing and coordination of the communication apparatus 500.

For example, the transceiver unit 510 is configured to send first information and the like.

Optionally, the communication apparatus 500 may further include a processing unit 520, configured to perform content related to steps such as processing and coordination of the communication apparatus 500.

The foregoing content is merely used as example descriptions. The communication apparatus 500 is responsible for performing related methods or steps in the foregoing method embodiments.

Optionally, the communication apparatus 500 further includes a storage unit 530, and the storage unit 530 is configured to store a program or code for performing the foregoing method. In other words, the storage unit 530 may be configured to store instructions and/or data, and the processing unit 520 may read the instructions and/or the data in the storage unit 530, to enable the communication apparatus 500 to implement the foregoing method embodiments. For example, the communication apparatus 500 may be configured to perform the solution shown in FIG. 3.

For example, the processing unit 520 may be configured to receive first information, where the first information is used to configure N SRS ports of a first SRS resource, M of the N SRS ports are used to send an SRS, N is a positive integer greater than 2, and M is a positive integer less than N.

For example, the processing unit 520 may be configured to send first information, where the first information is used to configure N SRS ports of a first SRS resource, M of the N SRS ports are used to send an SRS, N is a positive integer greater than 2, and M is a positive integer less than N.

For details of other implementations, refer to detailed descriptions of the embodiment shown in FIG. 3. Details are not described herein again. It should be understood that specific processes of performing the foregoing corresponding processes by the components are described in detail in the foregoing method embodiments. For brevity, details are not described herein again.

When the communication apparatus is a chip, the chip includes a transceiver, a memory, and a processor. The transceiver may be an input/output circuit or a communication interface. The processor is a processor, a microprocessor, or an integrated circuit integrated on the chip. A sending operation of the first apparatus or the second apparatus in the foregoing method embodiments may be understood as outputting of the chip, and a receiving operation of the first apparatus or the second apparatus in the foregoing method embodiments may be understood as inputting of the chip.

This application further provides a chip, including a processor, configured to invoke, from a memory, instructions stored in the memory and run the instructions, to enable a communication apparatus on which the chip is installed to perform the method in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the method in the foregoing examples. Optionally, the chip further includes the memory, and the memory is configured to store a computer program or the code.

This application further provides a processor, configured to be coupled to a memory and perform methods and functions related to the communication apparatus or encoding apparatus in any one of the foregoing embodiments.

Another embodiment of this application provides a computer program product including a computer program or instructions. When the computer program product runs on a computer, the method in the foregoing embodiments is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

This application further provides a communication system. The communication system includes a first apparatus and a second apparatus. The first apparatus and the second apparatus are respectively configured to perform the methods performed by the first apparatus and the second apparatus in the foregoing embodiments.

A person of ordinary skill in the art may be aware that, in combination with units and algorithm steps in examples described in embodiments disclosed in this specification, this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. There may be other division manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate parts may or may not be physically separate, and parts displayed as units may or may not be physical units, that is, may be located in one place, or may be distributed on a plurality of network units. A part of or all the units may be selected based on an actual requirement to achieve objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of steps of the method described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:
receiving first information, wherein the first information is used to configure N SRS ports of a first sounding reference signal SRS resource, M of the N SRS ports are used to send an SRS, N is a positive integer greater than 2, and M is a positive integer less than N.

2. The method according to claim 1, wherein N=4 and M=3.

3. The method according to claim 1 or 2, wherein indexes of the N SRS ports comprise a first index, a second index, a third index, and a fourth index; and
indexes of the M SRS ports comprise the first index, the second index, and the third index; or
indexes of the M SRS ports comprise the first index, the second index, and the fourth index; or
indexes of the M SRS ports comprise the first index, the third index, and the fourth index; or
indexes of the M SRS ports comprise the second index, the third index, and the fourth index.

4. The method according to any one of claims 1 to 3, wherein the method further comprises:
receiving second information, wherein the second information indicates the M SRS ports.

5. The method according to claim 4, wherein the indexes of the N SRS ports comprise the first index, the second index, the third index, and the fourth index, and the method further comprises:
determining, based on the second information, that the indexes of the M SRS ports comprise the first index, the second index, and the third index, wherein the second information comprises the fourth index; or
determining, based on the second information, that the indexes of the M SRS ports comprise the first index, the second index, and the fourth index, wherein the second information comprises the third index; or
determining, based on the second information, that the indexes of the M SRS ports comprise the first index, the third index, and the fourth index, wherein the second information comprises the second index; or
determining, based on the second information, that the indexes of the M SRS ports comprise the first index, the second index, and the third index, wherein the second information comprises the first index.

6. The method according to claim 4, wherein the indexes of the N SRS ports comprise the first index, the second index, the third index, and the fourth index, and the method further comprises:
determining, based on the second information, that the indexes of the M SRS ports comprise the first index, the second index, and the third index, wherein the second information comprises the first index, the second index, and the third index; or
determining, based on the second information, that the indexes of the M SRS ports comprise the first index, the second index, and the fourth index, wherein the second information comprises the first index, the second index, and the fourth index; or
determining, based on the second information, that the indexes of the M SRS ports comprise the first index, the third index, and the fourth index, wherein the second information comprises the first index, the third index, and the fourth index; or
determining, based on the second information, that the indexes of the M SRS ports comprise the first index, the second index, and the third index, wherein the second information comprises the first index, the second index, and the third index.

7. The method according to any one of claims 1 to 6, wherein the method further comprises:
receiving third information, wherein the third information is used to configure P SRS ports of a second SRS resource, P is a positive integer greater than 2, P=N, Q of the P SRS ports are used to send an SRS, Q is a positive integer less than P, and the Q SRS ports correspond to the M SRS ports.

8. The method according to any one of claims 1 to 7, wherein the method further comprises:
equally distributing total SRS transmit power to the M SRS ports.

9. The method according to any one of claims 1 to 8, wherein the M SRS ports respectively correspond to M physical uplink shared channel PUSCH ports.

10. The method according to any one of claims 1 to 9, wherein the method further comprises:
scaling total PUSCH transmit power based on a scaling coefficient, wherein the scaling coefficient is equal to a ratio of a number of non-zero power PUSCH ports to M.

11. The method according to any one of claims 1 to 10, wherein the method further comprises:
sending fourth information, wherein the fourth information indicates that a maximum number of codebook-based PUSCH multiple-input multiple-output layers supported by a first apparatus is M.

12. The method according to any one of claims 1 to 10, wherein the method further comprises:
sending fifth information, wherein the fifth information indicates that a maximum number of SRS ports supported by a first apparatus in an SRS resource is M.

13. The method according to any one of claims 1 to 10, wherein the method further comprises:
sending sixth information, wherein the sixth information indicates an antenna switching capability supported by a first apparatus, and the sixth information is M transmit and M receive tMrM, tMr4, or tMr8.

14. The method according to any one of claims 1 to 10, wherein the method further comprises:
sending seventh information, wherein the seventh information indicates that a number of uplink antenna ports supported by a first apparatus is M.

15. An information transmission method, wherein the method comprises:
sending first information, wherein the first information is used to configure N SRS ports of a first sounding reference signal SRS resource, M of the N SRS ports are used to send an SRS, N is a positive integer greater than 2, and M is a positive integer less than N.

16. The method according to claim 15, wherein N=4 and M=3.

17. The method according to claim 15 or 16, wherein indexes of the N SRS ports comprise a first index, a second index, a third index, and a fourth index; and
indexes of the M SRS ports comprise the first index, the second index, and the third index; or
indexes of the M SRS ports comprise the first index, the second index, and the fourth index; or
indexes of the M SRS ports comprise the first index, the third index, and the fourth index; or
indexes of the M SRS ports comprise the second index, the third index, and the fourth index.

18. The method according to any one of claims 15 to 17, wherein the method further comprises:
sending second information, wherein the second information indicates the M SRS ports.

19. The method according to claim 18, wherein the indexes of the N SRS ports comprise the first index, the second index, the third index, and the fourth index, and the second information comprises the fourth index, the third index, the second index, or the first index.

20. The method according to claim 18, wherein the indexes of the N SRS ports comprise the first index, the second index, the third index, and the fourth index, and the second information comprises:
the first index, the second index, and the third index; or
the first index, the second index, and the fourth index; or
the first index, the third index, and the fourth index; or
the first index, the second index, and the third index.

21. The method according to any one of claims 15 to 20, wherein the method further comprises:
sending third information, wherein the third information is used to configure P SRS ports of a second SRS resource, P is a positive integer greater than 2, P=N, Q of the P SRS ports are used to send an SRS, Q is a positive integer less than P, and the Q SRS ports correspond to the N SRS ports.

22. The method according to any one of claims 15 to 21, wherein the method further comprises:
receiving fourth information, wherein the fourth information indicates that a maximum number of codebook-based physical uplink shared channel PUSCH multiple-input multiple-output layers supported by a first apparatus is M.

23. The method according to any one of claims 15 to 21, wherein the method further comprises:
receiving fifth information, wherein the fifth information indicates that a maximum number of SRS ports supported by a first apparatus in an SRS resource is M.

24. The method according to any one of claims 15 to 21, wherein the method further comprises:
receiving sixth information, wherein the sixth information indicates an antenna switching capability supported by a first apparatus, and the sixth information is M transmit and M receive tMrM, tMr4, or tMr8.

25. The method according to any one of claims 15 to 21, wherein the method further comprises:
receiving seventh information, wherein the seventh information indicates that a number of uplink antenna ports supported by a first apparatus is M.

26. A communication apparatus, comprising at least one module or unit, wherein the at least one module or unit is configured to perform the method according to any one of claims 1 to 14, or the method according to any one of claims 15 to 25.

27. A communication apparatus, comprising a processor and a memory, wherein the memory stores a computer program or instructions, and the processor is configured to execute the computer program or the instructions, to enable the communication apparatus to perform the method according to any one of claims 1 to 14, or the method according to any one of claims 15 to 25.

28. A computer-readable storage medium, wherein the computer-readable storage medium stores a computer program or instructions, and when the computer program or the instructions are run on a computer, the method according to any one of claims 1 to 14 is performed, or the method according to any one of claims 15 to 25 is performed.

29. A computer program product, comprising computer program code, wherein when the computer program code is run, the method according to any one of claims 1 to 14 is implemented, or the method according to any one of claims 15 to 25 is implemented.

30. A communication system, comprising a first apparatus and a second apparatus, wherein the first apparatus is configured to perform the method according to any one of claims 1 to 14, and the second apparatus is configured to perform the method according to any one of claims 15 to 25.
